Europäisches Patentamt

European Patent Office

Office européen des brevets

(19)

(11) Veröffentlichungsnummer: **0 191 157**
**A2**

# (12) EUROPÄISCHE PATENTANMELDUNG

(21) Anmeldenummer: 85114904.7

(22) Anmeldetag: 25.11.85

(51) Int. Cl.⁴: **C 08 L 95/00**
// (C08K3/34, 3:36)

(30) Priorität: 14.02.85 DE 3505051

(43) Veröffentlichungstag der Anmeldung: 20.08.86
Patentblatt 86/34

(84) Benannte Vertragsstaaten: **AT BE CH DE FR GB IT LI LU NL SE**

(71) Anmelder: **Degussa Aktiengesellschaft, Weissfrauenstrasse 9, D-6000 Frankfurt am Main 1 (DE)**

(72) Erfinder: **Müller, Karl-Hans, Dr., Robert-Koch-Strasse 17, D-6454 Bruchköbel (DE)**
Erfinder: **Barthel, Walter, Gartenstrasse 7, D-6456 Langenselbold (DE)**

(54) **Pulverförmiges Bitumenkonzentrat und seine Verwendung.**

(57) Das pulverförmige Bitumenkonzentrat enthält eine Mischung aus synthetischer Kieselsäure und kristallinem, pulverförmigem synthetischem Zeolith oder Zeolithgemisch.

EP 0 191 157 A2

85 111 MS

Degussa Aktiengesellschaft
6000 Frankfurt am Main

Pulverförmiges Bitumenkonzentrat und seine Verwendung

Bitumen sind nach DIN 55 946 ein dunkelfarbiges, halbfestes bis springhartes, schmelzbares, hochmolekulares Kohlenwasserstoffgemisch, welches bei der schonenden Aufbereitung von Erdölen gewonnen wird, und die in Schwefelkohlenstoff löslichen Anteile der natürlichen Asphalte sowie Erdwachs und Montanwachs (vgl. Römpp Lexikon der Chemie, 7. Auflage, Seite 377).

Derartige Substanzen, die im angelsächsischen Bereich ( vor allem USA) als Asphalt bezeichnet werden, werden im Gemisch mit Kalksteinmehl, Granit-, Basalt-, Diabas-, Gabbro-Mehl im Straßenbau eingesetzt.

Von besonderer Bedeutung ist in diesem Zusammenhang die Verwendung von Naturasphalt. Naturasphalt kann in Gemischen mit bituminösen Bindemitteln nach DIN 1995 zur Herstellung mörtelreicher Deckschichten (z.B. Gussasphalt, Asphaltbeton, Sandasphalt und Asphaltmastix) eingesetzt werden. Ein derartiger Naturasphalt ist z.B. Trinidad-Epuré, welcher wie folgt zusammengesetzt ist:

| | |
|---|---|
| lösliches Bitumen | 53 bis 55 Gew.-% |
| Mineralanteil | 36 bis 37 Gew.-% |
| restliche Bestandteile | 9 bis 10 Gew.-% |

(vgl. Handbuch für Strassenwesen, Planung-Bau-Verkehr-Betrieb 1979, Otto Elsner Verlagsgesellschaft, Darmstadt).

Trinidad-Epuré sowie die anderen bekannten Naturasphalte weisen den Nachteil auf, daß sie vielfach harte, kompakte Massen bilden, die zunächst in kleine Stücke zerschlagen werden müssen, um mit den als Zuschlag verwendeten Stoffen gleichmässig mischbar zu sein.

Es ist bereits vorgeschlagen worden, Asphaltit in gekörntem Zustand anzuliegern und die Fliessfähigkeit des Granulates durch spezielle Zusätze zu verbessern.

Aus der OE-PS 280 876 ist ein Verfahren bekannt, nach dem man gekörnten Asphaltit mit einer Benetzungsflüssigkeit, z.B. Schwarzlauge, behandelt und das fertige Produkt dann in luftdichten Behältern verschweisst.

Aus der EP-PS 24513 sind pulverförmige Bitumenkonzentrate bekannt, die neben Bitumen 10 bis 80 Gew.-% an synthetischer Kieselsäure enthalten.

Aufgabe der Erfindung ist ein pulverförmiges, fliessfähiges und temperaturstabiles Bitumenkonzentrat.

Gegenstand der Erfindung ist ein pulverförmiges Bitumenkonzentrat, enthaltend eine Mischung, bestehend aus synthetischer Kieselsäure und kristallinem pulverförmigem synthetischem Zeolithen oder Zeolithgemisch.

3

Der Bitumenanteil kann, bezogen auf die gesamte Mischung, 30 bis 70 Gew.-%, vorzugsweise 45 bis 55 Gew.-% betragen.

Der Anteil an synthetischer Kieselsäure kann 8 bis 50 Gew.-%, vorzugsweise 15 bis 20 Gew.-%, bezogen auf die gesamte Mischung, betragen.

Der Anteil an Zeolith oder Zeolithgemisch kann, bezogen auf die gesamte Mischung, 15 bis 60 Gew.-%, vorzugsweise 30 bis 40 Gew.-% betragen.

Als synthetische Kieselsäure können gefällte als auch pyrogen hergestellte Kieselsäuren verwendet werden.

Die gefällte Kieselsäure kann eine BET-Oberfläche von 120 bis 500 m²/g aufweisen. Sie kann gegebenenfalls dampfstrahlvermahlen, sprühgetrocknet oder sprühgetrocknet und vermahlen sein.

Die pyrogen hergestellte Kieselsäure kann eine BET-Oberfläche von 100 bis 400 m²/g aufweisen.

Als eine gefällte Kieselsäure kann man eine Kieselsäure mit den folgenden physikalisch-chemischen Kenndaten einsetzen:

| | |
|---|---|
| Aussehen | lockeres, weißes Pulver |
| Röntgenstruktur | amorph |
| Oberfläche | 170 ± 25 m²/g (nach BET) |
| Mittlere Größe der Primärteilchen | 18 Nanometer |
| spezifisches Gewicht | 2,05 g/ml |

4

0-44918

85 111 MS                    - 6. -

| | | |
|---|---|---|
| Reinheitsgrad | $SiO_2$ | 98 % |
| | $Na_2O$ | 1 % |
| | $Al_2O_3$ | 0,2 % |
| | $SO_3$ | 0,8 % |
| Trocknungsverlust[1] | | 6 % |
| Glühverlust[2][3] | | 5 % |
| pH-Wert[4] | | 6,3 % |
| Löslichkeit | | praktisch unlöslich in Wasser |
| Charakteristik | | gefällte Kieselsäure |
| Stampfdichte[5] | | 200 g/Liter |
| Siebrückstand nach Mocker (DIN 53 580) | | 0,2 % |

[1] DIN 53 198, Verf.A
[2] bezogen auf die 2 Stunden bei 105°C getrocknete Substanz DIN 55 921)
[3] DIN 52 911
[4] DIN 53 200
[5] DIN 53 194

Als gefällte Kieselsäure kann man eine Kieselsäure einsetzen, welche dieselben physikalisch-chemischen Kenndaten aufweist und sich lediglich in der Höhe der Stampfdichte von der oben genannten unterscheidet. Die Stampfdichte kann z.B. 70 g/l betragen.

Als eine gefällte und sprühgetrocknete Kieselsäure kann man eine Kieselsäure mit den folgenden physikalisch-chemischen Kenndaten verwendet:

-7-
5

01 85 111 MS        - 5. -

| | | |
|---|---|---|
| Oberfläche nach BET | m²/g | 190 |
| Mittlere Größe der Primärteilchen | Nanometer | 18 |
| Mittlere Größe der Sekundärteilchen | Mikrometer | 80 |
| Stampfdichte (DIN 53 194) | g/l | 220 |
| Trocknungsverlust (DIN 55 921) (2 Std. bei 105°C) | % | 6 |
| Glühverlust[1] (DIN 55 921) (2 Std. bei 1000°C) | % | 5 |
| pH-Wert (DIN 53 200) | | 6,3 |
| $SiO_2$ (DIN 55 921)[2] | % | 98 |
| $Al_2O_3$ | % | 0,2 |
| $Fe_2O_3$ | % | 0,03 |
| $Na_2O$ | % | 1 |
| $SO_3$ | % | 0,8 |
| Siebrückstand nach Mocker (DIN 53 580) | % | 0,5 |
| Ölzahl (nach DIN 53 199) | g/100g | 230 |

[1] bezogen auf die 2 Stunden bei 105°C getrocknete Substanz

[2] bezogen auf die 2 Stunden bei 1000°C geglühte Substanz

Die gleiche gefällte und sprühgetrocknete Kieselsäure kann auch im vermahlenen Zustand mit einer mittleren Größe der Sekundärteilchen von z.B. 5 Mikrometer verwendet werden.

01 85 111 MS — 6 —

Der Begriff Zeolith entspricht der Beschreibung nach D.W. Breck, "Zeolite molecular sieves", Wiley Interscience 1974, Seiten 133 bis 180. Die eingesetzten Zeolithe können einen Wassergehalt von bis zu 27 % aufweisen.

Als pulverförmigen kristallinen synthetischen Zeolihen kann das erfindungsgemäße Bitumenkonzentrat einen Zeolithen des Typs A enthalten. Der Zeolith A weist die allgemeine Formel

$$1,0 \pm 0,2 \ M_2O \ . \ Al_2O_3 \ . \ 2,5 \pm 0,5 \ SiO_2 \ . \ y \ H_2O \ n$$

auf, wobei M ein Metallkation, wie z.B. Natrium- oder Kalium-Kation, n seine Wertigkeit und y ein Wert bis zu 5 bedeuten.

Vorzugsweise kann das Bitumenkonzentrat einen Zeolithen des Typs A enthalten, welcher nach Verfahren gemäß DE-AS 23 33 068, DE-AS 24 47 021, DE-AS 25 17 218, DE-OS 26 51 485, DE-OS 26 51 446, DE-OS 26 51 436, DE-OS 26 51 419, DE-OS 26 51 420 und/oder DE-OS 26 51 437 hergestellt wird. Der eingesetzte Zeolith A kann auch nach anderen bekannten Verfahren hergestellt werden, z.B. gemäß DE-PS 10 38 017 oder DE-AS 16 67 620.

Vorzugsweise kann der eingesetzte Zeolith A die folgenden physikalisch-chemischen Daten aufweisen:

Glühverlust nach DIN 55 921 < 24 %
Kornverteilung (Coulter-Counter)
Anteil < 15 Mikrometer:   96 – 100 Gew.-%
       < 10 Mikrometer:   95 – 99 Gew.-%
       < 1 Mikrometer:   < 5 Gew.-%

01 85 111 MS — 8 —

Weiterhin kann das erfindungsgemäße Bitumenkonzentrat als pulverförmigen Zeolithen einen Zeolithen des Typs Y mit der allgemeinen Formel

$$0,9 \pm 0,2 \ M_2O \ . \ Al_2O_3 \ . \ X \ SiO_2 \ . \ y \ H_2O \ n$$

enthalten, wobei M ein Metallkation, wie z.B. Natrium- oder Kaliumkation, n seine Wertigkeit, X ein Wert grösser als 3 und y ein Wert bis 9 bedeuten.

Der eingesetzte Zeolith Y kann die folgenden physikalisch-chemischen Kenndaten aufweisen:

| | | |
|---|---|---|
| Glühverlust nach DIN 55 921 | | <27 % |
| Kornverteilung (Coulter-Counter) | | |
| Anteile | <15 Mikrometer | 96 - 100 Gew.-% |
| | <10 Mikrometer | 85 - 99 Gew.-% |
| | <1 Mikrometer | <20 Gew.-% |

Dieses zeolithische Molekularsiebpulver kann beispielsweise gemäß DE-AS 10 98 929, DE-AS 12 03 239 oder DE-AS 12 63 056 hergestellt werden.

Weiterhin kann das erfindungsgemäße Bitumenkonzentrat als pulverförmigen Zeolithen einen Zeolithen des Typs X mit der allgemeinen Formel

$$0,9 \pm 0,2 \ M_2O \ . \ Al_2O_3 \ . \ 2,5 \pm 0,5 \ SiO_2 \ . \ y \ H_2O \ n$$

enthalten, wobei M ein Metallkation, z.B. Natrium- oder Kaliumkation, n seine Wertigkeit und y ein Wert bis zu 8 bedeuten.

d

85 111 MS                         - 8. -

Dieser pulverförmige Zeolith kann nach DE-PS 10 38 016,
DE-PS 11 38 383 oder DE-OS 20 28 163 hergestellt werden.

Der eingesetzte Zeolith X kann die folgenden physikalisch-
chemischen Daten aufweisen:

Glühverlust (DIN 55 921)                   $< 27$ Gew.-%
Korngrössenverteilung (Coulter-Counter)
Anteil    $< 15$ Mikrometer:        96 - 100 Gew.-%
          $< 10$ Mikrometer:        85 -  99 Gew.-%
          $< 1$ Mikrometer:              20 Gew.-%

Weiterhin kann das erfindungsgemäße Bitumenkonzentrat als
pulverförmigen Zeolithen einen Zeolithen des Typs P enthalten. Die Bezeichnung Zeolith P ist synonym mit der Bezeichnung synthetischer Philipsit und Zeolith B. Beispielsweise kann man den Zeolithen P nach dem Verfahren gemäß der
FR-PS 1 213 628 (Bayer AG) herstellen.

Die eingesetzte Zeolith P kann die folgenden physikalisch-
chemischen Kenndaten aufweisen.

Glühverlust (DIN 55 921)                   $< 15$ Gew.-%
Korngrößenverteilung (Coulter-Counter)
Anteil    $< 15$ Mikrometer:        99 - 100 Gew.-%
          $< 10$ Mikrometer:        97 -  99 Gew.-%
          $< 1$ Mikrometer:              20 Gew.-%

Das erfindungsgemäße Bitumenkonzentrat kann weiterhin
als pulverförmigen Zeolithen Hydroxysodalith mit der allgemeinen Formel

01 85 111 MS — 9. —

$Na_2O$ . $Al_2O_3$ . 2 $SiO_2$ . 2,5 $H_2O$

enthalten. Hydroxysodalith kann beispielsweise aus Zeolith A mittels Kochen in wässriger Natronlauge hergestellt werden (vgl. D.W. Breck, Zeolite molecular sieves", Seite 275 (1974) Wiley Interscience Publication).

Der eingesetzte Hydroxysodalith kann die folgenden physikalisch-chemischen Kenndaten aufweisen:

| | |
|---|---|
| Glühverlust (DIN 55 921) | ∠15 Gew.-% |
| Korngrößenverteilung (Coulter Counter) | |

| | |
|---|---|
| Anteil ⟨15 Mikrometer: | 99 - 100 Gew.-% |
| ⟨10 Mikrometer: | 90 - 99 Gew.-% |
| ⟨ 1 Mikrometer: | 10 Gew.-% |

In einer weiteren Ausführungsform der Erfindung kann das erfindungsgemäße Bitumenkonzentrat ein Gemisch aus den angegebenen Zeolithen enthalten. Dieses Gemisch kann sowohl durch Mischen der reinen Zeolithe als auch durch direkte Synthese mittels des Fällverfahrens hergestellt werden. Gemische, welche direkt hergestellt werden können, können Gemische der Zeolithe A und P, der Zeolithe A und X, der Zeolithe A und Hydroxysodalith, der Zeolithe P und X oder der Zeolithe P und Y sein. In einer vorzugsweisen Ausführung kann das Bitumenkonzentrat ein Gemisch aus Zeolith X und Zeolith P im Verhältnis 80 bis 5 zu 20 bis 95 enthalten.e

Ein derartiges Gemisch kann beispielsweise gemäß DE-OS 20 28 163, Seite 15, Tabelle 3, Beispiel 3 mittels eines Fällverfahrens hergestellt werden.

O-44918

85 111 MS  - 10. -

Zur Herstellung des erfindungsgemäßen pulverförmigen Bitumenkonzentrates eignen sich neben den bereits oben aufgeführten Bitumensorten die üblichen Destillationsbitumen sowie Gemische aus Destillationsbitumen und Produkten der Steinkohlenteerindustrie. Nach DIN 52 000 von 1980 verbleibt als Rückstand der Erdöldestillation das Destillatons- oder Straßenbaubitumen, dessen Bezeichnung aus dem Buchstaben B und einer Zahl besteht, die die mittlere Penetration in $\frac{1}{10}$ mm angibt. Die in der Bundesrepublik Deutschland gebräuchlichsten Normbitumen sind B 25 (hart), B 45, B 65, B 80 und B 200 (weich).

Entsprechend den Technischen Lieferbedingungen für Bindemittel auf Bitumen- und Teerbasis (ausgabe 195=9 lassen sich auch weiterentwickelte Teerbitumen verwenden.

Das erfindungsgemäße Bitumenkonzentrat kann man herstellen, indem die synthetische Kieselsäure und der Zeolith in einem Mischer vorgelegt und gut durchmischt werden. Das heiße und flüssige Bitumen wird unter Rühren der Trägerkomponente in dünnem Strahl zufließen lassen, eingedüsrt oder aufgesprüht.

Das erfindungsgemäße Bitumenkonzentrat weist die folgenden Vorteile auf:

- einfache Lagerung in Silos oder Säcken
- unbegrenzte Lebensdauer
- keine Anfälligkeit durch Witterungseinflüsse
- einfache Dosierung beim Herstellprozeß bituminöser Massen, da kein Aufschmelzen erforderlich
- Ausnutzung der vollen Leistung der Produktionsanlagen (z.B. Asphaltmischanlagen)

- Gewährleistung der vollen Wirkung der Einzelkomponenten synthetische Kieselsäure und Zeolith
- keine gesundheitlichen Schäden (da frei von kanzerogenen Stäuben und Fasern)
- keine Umweltgefährdung
- vollkommene Geruchsfreiheit in heißen Asphaltmischungen
- es ist trotz des hohen Bitumenanteils pulverförmig, temperaturstabil und fließfähig.

Das erfindungsgemäße Bitumenkonzentrat kann als Zuschlagstoff

a) zur Herstellung von Asphaltmischungen für den Straßen- und Brückenbau,
b) zur Herstellung von Asphaltmischungen für den Hochbau, z.B. Estriche und Industriefußböden,
c) zur Verbesserung oder Aufwertung von Altasphalt (Recycling von abgängigen Asphaltbelägen) und
d) zur Herstellung von bituminösen Baustoffen, wie z.B. Dachbahnen, Fugenmassen, Spachtelmassen, Dachbeschichtungsmassen, Isoliermassen, Unterbodenschutz, Korrosionsschutz, Antidröhnmassen

verwendet werden.

In einer besonderen Ausführungsform der Erfindung kann das erfindungsgemäße Bitumenkonzentrat zur Herstellung von Gußasphalt verwendet werden.

Verwendbare Gußasphaltmischungen werden zum Beispiel in der EP-PS 48 792 beschrieben.

85 111 MS — 12. —

Weiterhin wird Gussasphalt in DIN 4109, Blatt 4, Seite 3, Abschnitt 5,3,5 (Gussasphaltstrich), in DIN 18 354 und in Der Bundesanzeiger für Verkehr, Technische Vorschriften und Richtlinien für den Bau bituminöser Fahrbahndecken Teil 6, Seite 7, Ausgabe 1975 beschrieben.

Dementsprechend ist Gußasphalt eine dichte bituminöse Masse aus Splitt, Sand, Füller und Straßenbaubitumen oder Straßenbaubitumen und Naturasphalt, deren Mineralstoffgemisch hohlraumarm zusammengesetzt ist. Der Bindemittelgehalt ist auf die Hohlräume der Mineralmasse so abgestimmt, dass diese im Einbauzustand voll ausgefüllt sind und ein geringer Überschuß an Bindemittel vorhanden ist. Dieses Gemisch ist in heißem Zustand giess- und streichbar und bedarf beim Einbau keiner Verdichtung. Die Oberfläche wird unmittelbar nach dem Einbau des Gußasphaltes durch Aufrauhen oder Abstumpfen nachbehandelt.

Von Gußasphalt für Straßen- und Estrichbau wird eine hohe Standfestigkeit (Verformungswiderstand) und möglichst gleichzeitig eine gute Verarbeitungsfähigkeit verlangt. Da ein derartiger hohlraumfreier Asphalt keine Rüttel- oder Walzenverdichtung erfährt, muß eine vernünftige Gieß- bzw. Glättfähigkeit vorhanden sin. Im Straßenbau wird ein Großteil der mit Gußasphalt zu verlegenden Flächen mit Fertigern eingebaut, so daß auch ein steifer eingestelltes Material nach verarbeitet werden kann. Anders verhält es sich an Stellen, wo nur Handeinbau erfolgen kann, wie z.B. an Einbuchtungen, auf Brücken, auf Rampen, bei Rinnen etc. Hier kann nur ein geschmeidiger Asphalt sauber verarbeitet werden.

0-44918

Spezielle Probleme gibt es beim Verlegen von Gußasphalt-Industriefußböden. Die Belagstärken bewegen sich zwischen 20-40 mm, wobei Unebenheiten des Untergrundes berücksichtigt werden müssen. Eine einwandfreie Ausbringung der heißen Asphaltmassen sowie rissfreie, widerstandsarme Glättung ist erforderlich. Ziel ist immer eine große Verlegeleistung der Kolonnen, da der Endpreis der Bauleistung sehr lohnabhängig ist. Bei in der Verlegeleistung verbesserten Industriefußböden akzeptiert man eine höheren Materialeinstand, wenn in der Endrechnung ein Preisvorteil entsteht.

Gußasphaltaufmischungen kann man durch gezeile Mineralzusammensetzung (z.B. "starke" Füller) oder Bitumenreduzierung bis auf Minimalgrenze steif einstellen. Die dadurch erhöhte Standfestigkeit geht auf jeden Fall zu Lasten der Verlegeleistung. Sinnvoller dürfte es sein, durch wirkungsvolle Additive einen höheren Verformungswiderstand oder eine geringere Eindringtiefe und gleichzeitig eine gute Geschmeidigkeit der Asphaltmassen anzustreben.

Die Zugabe von gefällter Kieselsäure allein auf die Gußasphaltmasse führt zu einer Reduzierung der Eindringtiefe, d.h. zu einer Erhöhung der Verförmungsstabilität. Gleichzeitig muß die Verarbeitungstemperatur um 20°C erhöht werden, was eine Verringerung der Verarbeitungswilligkeit des Gußasphaltes anzeigt.

Wird kristalliner synthetischer Zeolith der Asphaltmischung zugegeben, so reduziert sich die Eindringtiefe und die Verarbeitungstemperatur.

85 111 MS                    - 14. -

Gibt man der Gußasphaltmasse gefällte Kieselsäuren und kristallinen, synthetischen Zeolithen zu, so wird die Eindringtiefe deutlich erniedrigt, die Verarbeitungstemperatur jedoch nur unwesentlich erhöht. Mit einer Veränderung des Verhältnisses von gefällter Kieselsäure und kristallinem synthetischem Zeolithen lassen sich Korrekturen des Temperaturverhaltens erreichen. Dies bedeutet, daß Zeolith in erhöhter Zugabe zu geschmeidigeren Gußasphaltmassen führt, eigenständig eine Erhöhung der Verformungsstabilität erreicht, die Kombination von gefällter Kieselsäure aber den deutlichsten bautechnischen Vorteil innerhalb der Versuchsreihe erbringt.

Die durch die Zugabe von gefällter Kieselsäure erfolgte für die Verarbeitungswilligkeit (Gieß- Ausbreit- und Glättfähigkeit) unangenehme Stabilitätsversteifung wird durch den wasserabspaltenden Zeolithen verschoben, wobei eine streichfähige Masse über eine gewisse Zeitspanne erhalten bleibt. Der erkaltete Belag zeigt dann jedoch nach Abschluß aller Verarbeitungsvorgänge eine geringere Eindringtiefe bzw. einen erhöhten Verformungswiderstand, wozu der Zeolith selbst noch zur Verbesserung beiträgt. Die kombinierte Anwendung von gefällter Kieselsäure und kristallinem, synthetischem Zeolithen führt zu einem in der Stabilität und damit zu einem in der Belastbarkeit verbesserten Gußasphalt. Dieser höhere Verformungswiderstand wird im Straßenbau bei Sonderanwendungen gewünscht. Sonderbeläge finden Verwendung auf Brücken, stark frequentierten Ampelkreuzungen, Rampen etc.. Industriefußböden wird eine hohe Belastbarkeit abgefordert. Werks- und Lagerhallen sollen Regale, Paletten, Maschinen usw. aufnehmen. Die großen Lasten werden oft nur über kleine Druckauflageflächen (Regalständer) auf den Fußboden übertragen. Unerwünschte Eindrücke sind die Folge. Die Befahrung geschieht mit Gabelstaplern und anderen Fahrzeugen, die starke Belastungen auf den Boden abgeben und damit Spuren hinterlassen.

Besonders vorteilhaft ist, daß die Verbesserung der Stabilität des Gußasphaltes bei Verwendung des Kombinationsadditives Kieselsäure/Zeolith nicht zu Lasten der Verarbeitungsfähigkeit geht. Reduzierte $m^2$-Leistungen der Verlegekolonnen sind nich erwünscht, da sie sich bei dem hohen Anteil an Lohnkosten am Endpreis des verlegten Fußbodens negativ auswirken.

Das erfindungsgemäße pulverförmige Bitumenkonzentrat wird anhand des folgenden Beispiels näher erläutert und beschrieben:

Zur Herstellung des pulverförmigen Bitumenkonzentrates werden die folgenden Arbeitsgänge durchgeführt:

1. Erwärmen der jeweiligen Kieselsäure, des Zeolithen und des Bitumens auf 140°C im Trockenschrank.
2. Vorlage der abgewogenen Kieselsäuremenge und Zeolithmenge im Mischgefäß. Portionsweise Zugabe des Bitumens unter Rühren (per Hand oder mit Flügelrührer, je nach Menge), kräftiges Nachmischen bis zur sichtbaren Homogenisierung.
3. Ausbringen der nach heissen Masse auf ein Blech, Verteilung bis zum Abkühlen auf Raumtemperatur.
4. Die kalte, krümelige bis granulatartige Masse wird im Braun-Küchenmixer ca. 30 Sekunden zuerschlagen und gemahlen.
5. Ausbringen des Pulvers auf ein Sieb 0,75 mm, Absiebung, Homogenisierung im Glasgefäß im Turbula-Mischer.

85 111 MS — 16 —

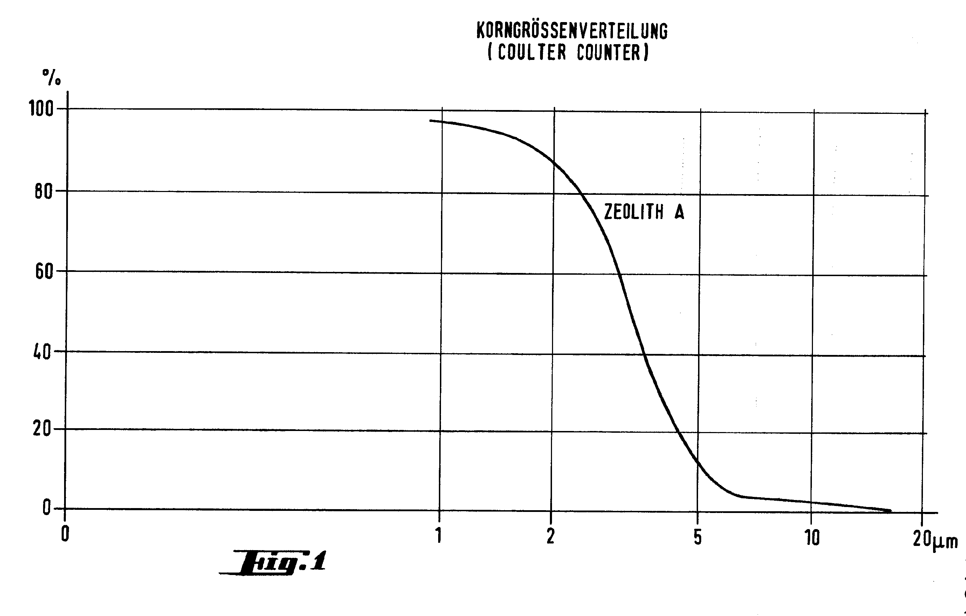

Als Zeolith wird ein Zeolith des Typs A (Wessalith® P der Degussa AG) verwendet, welcher gemäß der DE-OS 26 51 436 hergestellt wurde und das Teilchenspektrum gemäß Figur 1 aufweist.

Als synthetische Kieselsäure wird die Kieselsäure Sipernat® 22 der Degussa AG eingesetzt.

Die Kieselsäure Sipernat 22® ist eine gefällte und sprühgetrocknete Kieselsäure mit den folgenden physikalisch-chemischen Kenndaten:

| | | |
|---|---|---|
| Oberfläche nach BET | $m^2/g$ | 190 |
| Mittlere Größe der Primärteilchen | Nanometer | 18 |
| Mittlere Größe der Sekundärteilchen | Mikrometer | 80 |
| Stampfdichte (DIN 53 194) | g/l | 220 |
| Trocknungsverlust (DIN 55 291) (2 Std. bei 105°C) | % | 6 |
| Glühverlust[1] (DIN 55 921) (2 Std.bei 1000°C) | % | 5 |
| pH-Wert (DIN 53 200) | | 6,3 |
| $SiO_2$ (DIN 55 921)[3] | % | 98 |
| $Al_2O_3$ | % | 0,2 |
| $Fe_2O_3$ | % | 0,03 |
| $Na_2O$ | % | 1 |
| $SO_3$ | % | 0,8 |
| Siebrückstand nach Mocker (DIN 53 580) | % | 0,5 |
| Ölzahl (nach DIN 53 199) | g/100 g | 230 |

O-4491S

85 111 MS         - 18. -

[1] bezogen auf die 2 Stunden bei 105°C getrocknete Substanz

[2] in Wasser : Aceton oder Methanol 1:1

[3] bezogen auf die 2 Stunden bei 1000°C geglühte Substanz

[4] enthält etwa 2 % chemisch gebundenen Kohlenstoff

| | |
|---|---|
| SIPERNAT 22 | 17 Gew.-% |
| WESSALITH P | 33 Gew.-% |
| BITUMEN B 65 | 50 Gew.-% |
| | 100 Gew.-% |

Produktbeschreibung: trockenes, fließ- und rieselfähiges,
mittel- bis schwarzbraunes Pulver

Schüttdichte:        0,50 - 0,70  [kg/l]

| Kornaufbau: | | | | |
|---|---|---|---|---|
| 0 | - 0,09 | mm | 2 | - 4 Gew.-% |
| 0,09 | - 0,2 | mm | 20 | - 35 Gew.-% |
| 0,2 | - 0,4 | mm | 10 | - 25 Gew.-% |
| 0,4 | - 0,8 | mm | 15 | - 30 Gew.-% |
| 0,8 | - 1,0 | mm | 4 | - 12 Gew.-% |
| 1,0 | - 2,0 | mm | 10 | - 20 Gew.-% |
| 2,0 | | mm | 2 | - 8 Gew.-% |

01 85 111 MS

Degussa Aktiengesellschaft
6000 Frankfurt am Main 1

Pulverförmiges Bitumenkonzentrat und seine Verwendung

Patentansprüche

1. Pulverförmiges Bitumenkonzentrat, enthaltend eine Mischung, bestehend aus synthetischer Kieselsäure und kristallinem, pulverförmigem, synthetischem Zeolithen oder Zeolithgemisch.

2. Bitumenkonzentrat nach Anspruch 1, dadurch gekennzeichnet, daß der Bitumenanteil 30 bis 70 Gew.-%, vorzugsweise 45 bis 55 Gew.-% bezogen auf die gesamte Mischung, beträgt.

3. Bitumenkonzentrat nach den Ansprüchen 1 oder 2, dadurch gekennzeichnet, daß der Anteil an synthetischer Kieselsäure 8 bis 50 Gew.-%, vorzugsweise 15 bis 20 Gew.-%, bezogen auf die gesamte Mischung, beträgt.

4. Bitumenkonzentrat nach den Ansprüchen 1 bis 3, dadurch gekennzeichnet, daß der Anteil an Zeolith oder Zeolithgemisch 15 bis 60 Gew.-%, vorzugsweise 30 bis 40 Gew.-%, bezogen auf die gesamte Mischung, beträgt.

5. Verwendung des Bitumenkonzentrates nach den Ansprüchen 1 bis 4 als Zuschlagstoff zur Herstellung von Asphaltmischungen für den Strassen- und Brückenbau.

-2-

6. Verwendung des Bitumenkonzentrates nach den Ansprüchen 1 bis 4 als Zuschlagstoff zur Herstellung von Asphaltmischungen für den Hochbau, z.B. Estriche und Industriefußböden.

7. Verwendung des Bitumenkonzentrates nach den Ansprüchen 1 bis 4 als Zuschlagstoff zur Verbesserung oder Aufwertung von Altasphalt.

8. Verwendung des Bitumenkonzentrates nach den Ansprüchen 1 bis 4 als Zuschlagstoff zur Herstellung von bituminösen Baustoffen, wie z.B. Dachbahnen, Fugenmassen, Spachtelmassen, Dachbeschichtungsmassen, Isoliermassen, Unterbodenschutz, Korrosionsschutz, Antidröhnmassen.

KORNGRÖSSENVERTEILUNG
(COULTER COUNTER)

ZEOLITH A

Fig.1

0191157

1/1